# EUROPÄISCHE PATENTSCHRIFT

(11) **EP 1 287 331 B1**
(45) Veröffentlichungstag und Bekanntmachung des Hinweises auf die Patenterteilung: **15.11.2006**
(21) Anmeldenummer: 01936034.6
(22) Anmeldetag: 01.05.2001
(51) Int. Cl.: G01N 15/06, G01N 27/60

(54) **VERFAHREN UND EINRICHTUNG ZUR EXTRAKTIVEN TRIBOELEKTRISCHEN STAUB- UND AEROSOLMESSUNG IN STRÖMENDEN GASEN**
METHOD AND DEVICE FOR THE EXTRACTIVE TRIBOELECTRIC MEASUREMENT OF DUST AND AEROSOLS IN STREAMING GASES
PROCEDE ET DISPOSITIF DE MESURE TRIBOELECTRIQUE DE LA TENEUR EN POUSSIERE ET EN AEROSOL DE GAZ EN ECOULEMENT

(30) Priorität: 02.05.2000 DE 10022391; 30.04.2001 DE 10121620
(43) Veröffentlichungstag der Anmeldung: 05.03.2003
(73) Patentinhaber: Dr. Födisch Umweltmesstechnik AG, 04420 Kulkwitz (DE)
(72) Erfinder: FÖDISCH, Holger, 04347 Leipzig (DE); SCHENGBER, Petra, 06217 Merseburg (DE); ULBRICH, Michael, 04179 Leipzig (DE)
(74) Vertreter: Voigt, Wolf-Rüdiger
(86) Internationale Anmeldenummer: PCT/DE2001/001674
(87) Internationale Veröffentlichungsnummer: WO 2001/084116

(56) Entgegenhaltungen:
- WO-A-99/41585
- DD-A- 297 902
- US-A- 3 794 909
- US-A- 4 140 005
- US-A- 4 179 934

## Beschreibung

Die Erfindung betrifft ein Verfahren und eine Einrichtung zur Staub- und Aerosolmessung in strömenden Gasen unter Verwendung des triboelektrischen Effekts, wobei die Signalwirkung des Effekts durch geeignete Verfahrens- und gerätetechnische Maßnahmen verstärkt wird.

Bei der Anwendung der Erfindung wird ein Teilstrom vom staubbeladenen Hauptgasstrom abgezweigt, in geeigneter Weise konditioniert und der Staub- und Aerosolgehalt durch Nutzung des triboelektrischen Effektes bestimmt.

In dem Fachbeitrag "Grundlage Ladungsdifferenz, triboelektrische Staubmessung unter theoretischen und praktischen Gesichtspunkten", H. Födisch, D. Richter, Sonderdruck aus Verfahrenstechnik 12/97, wird u. a. ausgeführt, daß Ladungsübergang eintritt, wenn man zwei Körper durch Berührung oder Reibung miteinander in Kontakt bringt. Die Atome auf den Oberflächen tauschen Elektronen aus, so daß sich eine Grenzschicht mit einer positiven und einer negativen Oberflächenladung in einem sehr geringen (molekularen) Abstand voneinander ausbildet. Diese Ladungsdifferenz ist die Grundlage der triboelektrischen Meßgeräte. In dem Beitrag wird u. a. der Einfluß der Geschwindigkeit der Staubteilchen auf das Meßergebnis untersucht und festgestellt, daß nach erfolgter Kalibrierung aus dem triboelektrischen Signal und der Geschwindigkeit der Staubgehalt für eine bestimmte Meßaufgabe ermittelt werden kann.

Ein neuartiges Staubmeßgerät auf triboelektrischer Basis wurde in "VDI Berichte", Nr. 1443, 1999, Seite 447 bis 458 von H. Födisch, P. Schengber, U. Riemann vorgestellt. In diesem Zusammenhang wird auch auf die Offenlegungsschrift DE 197 29 144 A1 verwiesen. Durch den gewählten Sondenaufbau wurde in Verbindung mit geeigneter Auswertetechnik eine hohe Genauigkeit der Meßergebnisse erreicht. Das entsprechende Staubkonzentrationsmeßgerät wird zur kontinuierlichen Messung von Staubgehalten, insbesondere zur Emissionsmessung sowie zur Staubkonzentrationsmessung in der Prozeßüberwachung eingesetzt. Es soll auch hier angemerkt werden, daß vor allem der Einfluß der Geschwindigkeit der Staubteilchen auf das triboelektrische Signal entsprechend ausgewertet wurde und reproduzierbare Ergebnisse erreicht wurden.

Im weiteren soll auf die Patentschrift DD 297 902 A7 verwiesen werden. Dieser Erfindung liegt die Aufgabe zugrunde, unter Einsatz entsprechender Meßtechnik eine automatische Teilstromentnahme aus einem feststoffbeladenen Hauptgasstrom zu entnehmen und dabei im Hinblick auf die meßtechnische Verarbeitung gleiche Dispersitätszustände im Haupt- und Teilgasstrom zu ermöglichen.

Der Hinweis auf die Patentschrift DD 297 902 A 7 erfolgt, weil bei der noch darzulegenden Erfindung auch ein Teilstrom abgezweigt wird, welcher nach entsprechender Bearbeitung messtechnisch ausgewertet wird. Mit der Teilstromentnahme handelt es sich im Grunde genommen um eine extraktive Staubmessung.
Es soll noch auf die US 4 179 934 verwiesen werden, die ein Verfahren und eine Einrichtung zur extraktiven triboelektrischen Staubmessung betrifft. Bei diesem Verfahren trifft ein von einem staubbeladenen Hauptgasstrom abgezweigter Teilstrom über einen Eintrittszylinder in eine mit Messfühlern versehene röhrenförmige triboelektrische Messkammer ein. Der Teilgasstrom wird unter reibender Bewegung an den Messfühlern fortbewegt, wobei die im Teilgasstrom enthaltenen Staubpartikel einen Ladungsaustausch an den Messfühlern erzeugen und der Gastrom über einen Austrittsstutzen die triboelektrische Messkammer verlässt. Diese Druckschrift offenbart somit alle Merkmale des Oberbegriffs des Anspruchs 1 bzw. 4
Die US 3 794 909 betrifft eine Vorrichtung und ein Verfahren zur Erfassung von Schwebstoffen in einem Gasstrom. Im Prinzip handelt es sich hier auch um ein triboelektrisches Messverfahren für Staubpartikel in einem Gasstrom. Eine Kammer zur Vorbehandlung der Meßprobe wird verwendet, von sämtliche Aerosole durch Temperaturerhöhung zu verdampfen.
Es darf jedoch nicht übersehen werden, dass die vorgenannten zwei US-Patentschriften keine technische Lösung beinhalten, um die Aerosolkonzentration und/oder Staub und Aerosol gemeinsam im Teilstrom zu bestimmen.

Unter Berücksichtigung der bisherigen Ausführungen zum Stand der Technik soll ein Verfahren und eine Einrichtung zur Staub- und Aerosolmessung vorgeschlagen werden, mit denen, der Staubgehalt, die Aerosolkonzentration und/oder Stand und Aerosol und bestimmen lassen.

Erfindungsgemäß wird die Aufgabe wie folgt gelöst, wobei hinsichtlich der grundlegenden erfinderischen Gedanken auf die Patentansprüche 1 und 4 verwiesen wird. Die weitere erfinderische Lösung ergibt sich aus den Patentansprüchen 2 bis 3 und 5.

Zur Lösung der Aufgabe sollen weitere Ausführungen gemacht werden.
Wie schon gesagt wurde, entsteht bei Reibung zweier Körper aneinander eine positive und negative Ladung und deren Ladungsdifferenz ist Grundlage der triboelektrischen Messgeräte. Die Höhe der Potentialdifferenz und damit die Menge der ausgetauschten Ladungen ist von einer Vielzahl von Faktoren abhängig. Eine Abhängigkeit ergibt sich aus den elektrischen Eigenschaften der Stoffe. Die weitaus größeren Einflüsse sind - und das soll besonders hervorgehoben werden - mechanischer Natur, wie z. B. die Strömungsgeschwindigkeit der Teilchen, die Dauer des Kontakts, die Größe der austauschenden Fläche, die Intensität der Reibung und die Häufigkeit der Kontakte. Daher geht der erfindungsgemäße Vorschlag, der die Grundlage einer neuen Generation triboelektrischer Messgeräte bildet, davon aus, dass es möglich ist, die strömungsbedingten und Abgasrandparameter in geeigneter Weise einzustellen, um den Staubgehalt, die Aerosolkonzentration und/oder Staub und Aerosol gemeinsam im Teilstrom zu bestimmen.
Dies wird dadurch erreicht, dass die Temperatur des Teilgasstromes so gezielt variiert wird, dass die Aerosole wahlweise verdampft werden oder als triboelektrisch messbare Tröpfchen vorliegen. Zur technischen Realisierung wird der Teilgasstrom beheizt und gegebenenfalls durch Zumischung von trockener, vorgewärmter, staubfreier Luft definiert verdünnt.

Bei der hier vorliegenden Erfindung wird die Intensität der Reibung der Staub- und Aerosolteilchen an den Messfühlern, die variable Oberflächen und Formen aufweisen können, durch die zyklonartige Bewegung der Staubteilchen, die die triboelektrische Messkammer durchlaufen, erhöht.

Im Gegensatz zur in-situ-Messung, bei welcher z. B. der Hauptstromkanal einen Durchmesser von mehreren Metern haben kann und damit in seiner Strömungsgeschwindigkeit schwer zu beeinflussen ist, wird es möglich, den abgezweigten Teilstrom mit dem Eintritt in die Meßkammer konstant zu halten und erheblich zu beschleunigen. Mit der zyklonartigen (spiralförmigen) Fortbewegung wird ein großer Weg in der Meßkammer zurückgelegt. Auf die Dauer und die Intensität der Reibung und die Häufigkeit der Kontakte kann somit direkt und bei Erfordernis veränderlich Einfluß genommen werden.

Die Signalaufhahme erfolgt auf jedem Fall durch Anordnung eines oder mehrerer, gleichartig angeströmter Meßfühler in den triboelektrischen Meßkammern.

Ausfiihrungsformen der Meßfühler sind isoliert angeordnete Halbschalen oder anderweitige Meßfühler mit definiertem Strömungswiderstand, auf die noch eingegangen wird.

Auch die horizontale oder vertikale Anströmung von zentralen oder anderweitig angeordneten Meßfühlern ist nach vorheriger Geschwindigkeitserhöhung der Staub- und Aerosolpartikel möglich.

Die triboelektischen Meßsignale werden über entsprechende Elektrokabel abgeführt und der Verarbeitung zugeführt.

Erfindungsgemäß ist die Entnahmesonde für das staubbeladene Gas- bzw. für das Staub/Aerosolpartikelgemisch heizbar ausgeführt und so gestaltet, daß sofort nach Eintritt eines Teilgasstromes in die Entnahmesonde (mit der Temperatur des Hauptgasstromes) unter Verwendung einer Mischdüse ein Verdünnungsluftstrom mit einer definierten Temperatur dem Teilgasstrom zugemischt werden kann.
Dieser gegebenenfalls verdünnte Teilgasstrom, der nunmehr den Meßgasstrom darstellt, wird zweckmäßigerweise mit Hilfe eines Injektors beschleunigt und durch die triboelektrische Meßkammer befördert.

Unter Verwendung eines Mehrwegkugelhahns ist ein Spülen der triboelektrischen Meßkammer und der Entnahmesonde mit Spülluft möglich.
Im Meßgasweg ist eine Volumenstrommessung bzw. -überwachung integriert, mit welcher es möglich ist, den Teilgasstrom konstant zu halten bzw. den Einfluß der Volumenstromänderung auf das triboelektrische Signal rechnerisch zu kompensieren.

Die Erfindung soll nunmehr anhand eines Ausführungsbeispiels erläutert werden:
Die Figuren zeigen in Prinzipdarstellung
   - Figur 1 -: Einrichtung zur kontinuierlichen extraktiven Messung von Staubgehalten, wobei die Meßkammer außerhalb des Hauptgasstromes angeordnet ist.
   - Figur 2 -: Einrichtung zur kontinuierlichen extraktiven Messung von Staubgehalten, wobei die Meßkammer im Hauptgasstrom angeordnet ist.
   - Figur 3 -: Einrichtung zur kontinuierlichen extraktiven Messung von Staubgehalten in feuchten und klebrigen Abgasen.
   - Figur 4 -: Aerosolmessung mittels einer Einrichtung zur kontinuierlichen extraktiven Messung von Staubgehalten unter Verwendung einer Kammer für intermittierende Temperaturführung.
   - Figur 5 -: Einrichtung zur Aerosolmessung, jedoch unter Verwendung von zwei parallel angeordneten triboelektrischen Meßkammern auf unterschiedlichem Temperaturniveau.
   - Figur 6 -: Längsschnitt duch eine triboelektrische rohrförmige Meßkammer mit zyklonartiger Bewegung der Gaspartikel
   - Figur 7 -: Längsschnitt durch eine triboelektrische rohrförmige Meßkammer entsprechend Figur 6, wobei der Abstand zwischen zwei halbschalenförmigen Meßfühlern erkennbar ist.
   - Figur 8 -: Schnitt A-A gemäß Figur 6
   - Figur 9 -: Schnitt B-B gemäß Figur 6
   - Figur 10 -: Schnitt C-C in Anlehnung an Figur 6, wobei vier Meßfühler verwendet werden.
   - Figur 11 -: Beispiele für Meßfühler in der triboelektrischen Meßkammer mit tangentialer Anströmung
   - Figur 12 -: Beispiele für Meßfühler in der triboelektrischen Meßkammer mit vertikaler und horizontaler Anströmung

Die Bezugszeichen ergeben sich aus der beigefügten Bezugszeichenliste.

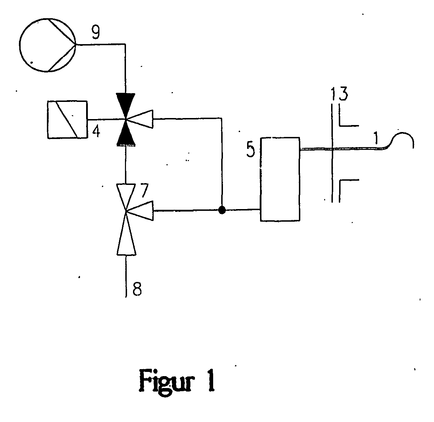

Gemäß Figur 1 ragt eine Hakensonde 1, die einen für isokinetische Probeentnahme ausgelegten Sondendurchmesser hat, in den Hauptstrom eines Abgaskanals. Die Hakensonde 1 ist mit dem Flansch 13 am Abgaskanal befestigt. Der Hakensonde 1 ist die Entnahmesonde 2 für Meßgas nachgeordnet. Es erfolgt eine Gasentnahme derart, daß aus dem Hauptgasstrom ein Teilgasstrom entnommen wird und sofort nach Eintritt in die Entnahmesonde 2 mit der jeweiligen Temperatur des Hauptgasstromes in die triboelektrische Meßkammer 5 gelangt, wo das Staubpartikel und Aerosole enthaltene Meßgas zyklonartig unter reibender Drehbewegung triboelektrische Signale erzeugt.

Der Meßgasstrom wird mittels eines Injektors 7 gefördert, der mit einem Treibluftgebläse 9 betrieben wird. Im Meßgasweg ist eine Volumenstrommessung bzw. -überwachung integriert, mit welcher es möglich ist, den Teilgasstrom konstant zu halten bzw. den Einfluß der Volumenstromänderung auf das triboelektrische Signal rechnerisch zu kompensieren.
Durch den in die Einrichtung integrierten Mehrwegekugelhahn 4 ist es möglich, ein zyklisches Rückspülen der triboelektrischen Meßkammer 5 und der Entnahmesonde 2 mit der Treibluft des Injektors 7 zu realisieren. Die Leitung für den Gasaustritt aus der Einrichtung ist mit dem Positionszeichen 8 versehen.

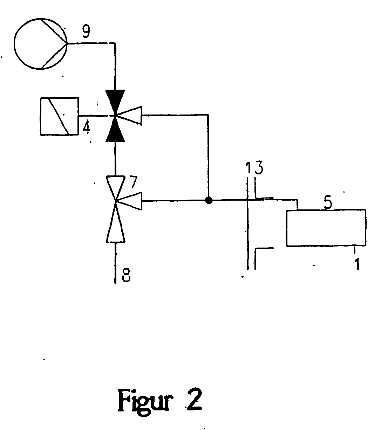

Die Figur 2 zeigt im Vergleich zu Figur 1 eine zweckmäßige Ausführungsvariante, indem nämlich die triboelektrische Meßkammer 5 im Hauptgasstrom angeordnet ist. Mit der Hakensonde 1 erfolgt die Probenentnahme, wobei dann die Probe als Teilgasstrom der triboelektrischen Meßkammer 5 zugeführt wird.

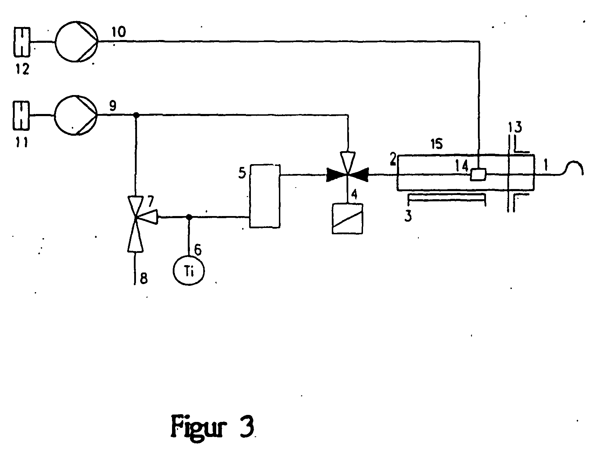

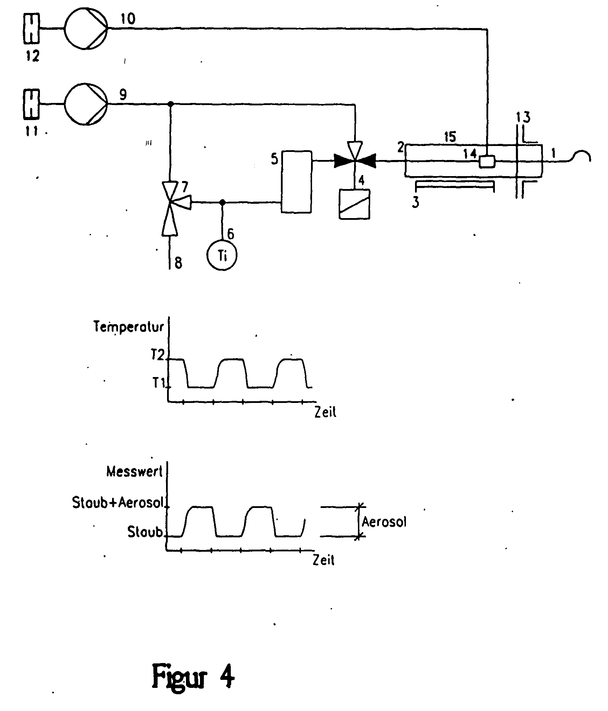

Mit den Figuren 3 und 4 wird dargestellt, wie die triboelektrischen Signale erzeugt werden bei Staubgehalten in feuchten und klebrigen Abgasen. Es geht also um die Aerosolmessung neben der Staubmessung.

Bei der Aerolmessung handelt es sich erfindungsgemäß um eine Differenzmessung zwischen sämtlichen meßbaren Partikeln und Aerosolen sowie den Feststoffpartikeln. Liegt eine Abgasmatrix vor, die kondensierbare Bestandteile enthält (organische Verbindungen, Wasser oder Säuren), so liegen diese Bestandteile je nach Temperatur gasförmig oder flüssig / fest vor. Gasförmige Bestandteile sind für das triboelektrische Meßprinzip nicht meßbar. Es existiert eine Temperatur T2, bei welcher die Aerosole im Teilgasstrom vollständig verdampft sind. In diesem Fall wird ausschließlich Staub detektiert. Bei einer zweiten, niedrigen Temperatur T1 liegen die kondensierbaren Bestandteile als Aerosol neben dem Staub vor. Die Differenz aus Staub und Aerosol sowie Staub ergibt dann die gesuchte Größe Aerosol.
Eine erfindungsgemäße Ergänzung der Einrichtung, wie sie in den Figuren 1 und 2 gezeigt wurde, ist daher erforderlich.

Nach der bereits beschriebenen Abgasentnahme über die Hakensonde 1 und die Entnahmesonde 2 für Meßgas wird der entnommene Teilgasstrom durch intermittierende Temperaturführung beeinflußt. Dementsprechend kann dem Teilluftstrom Verdünnungsluft über die Mischdüse 14 zugegeben werden. Dieser Prozeß spielt sich in einer Kammer für intermittierende Temperaturführung 15 ab. Zur intermittenden Temperaturführung wird eine geregelte Sondenheizung 3 eingesetzt. Die Verdünnungsluft wird durch ein Spülluftgebläse 10 mit vorgeschaltetem Ansaugfilter 12 bereitgestellt.

Der Verlauf der Temperatur beim Messen der Aerosolbestandteile, wie er in Figur 4 dargestellt ist, erfolgt unter Verwendung eines Temperaturmeßgerätes 6.

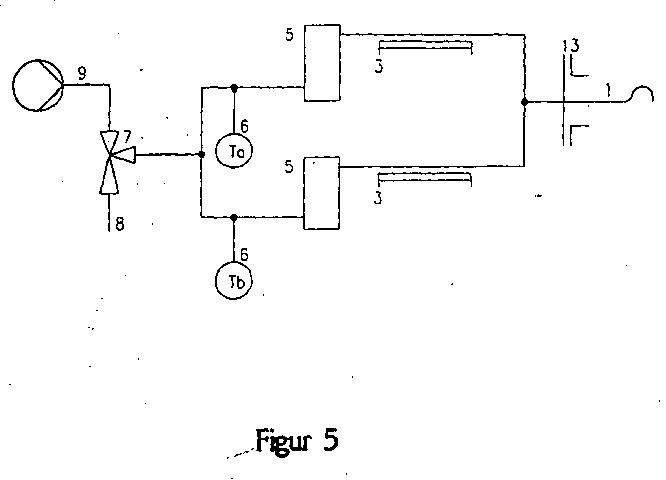

Gemäß Figur 5 erfolgt die Aerosolmessung in zwei triboelektrischen Meßkammern 5 auf unterschiedlichem Temperaturniveau. Dementsprechend wird der über die Hakensonde 1 entnommene Teilstrom in zwei Komponenten aufgeteilt und von jeweils einer geregelten Sondenheizung 3 auf unterschiedliche definierte Temperaturen gebracht. Nach Verlassen der zwei triboelektrischen Meßkammern 5 erfolgt die Messung der unterschiedlichen Temperaturen Ta, Tb mit den Meßgeräten 6.

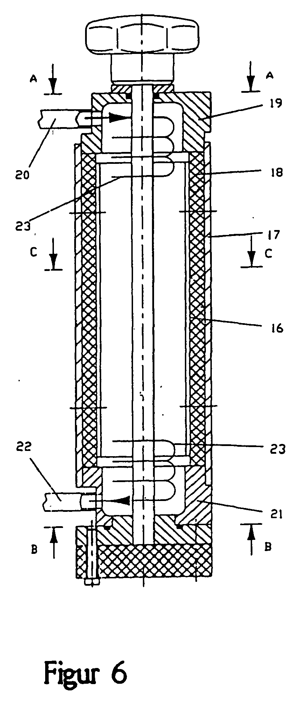

Die folgenden Figuren 6 bis 12 beziehen sich auf weitere Vorschläge, die die triboelektrischen Meßkammern 5 an sich betreffen bzw. um Ausbildungen und Anordnungen der Meßfühler 16 in der triboelektrischen Meßkammer 5.

Die triboelektrische Meßkammer 5 soll nunmehr anhand eines Ausführungsbeispiels mit halbschalenförmigen Meßfühlern 16 erläutert werden.

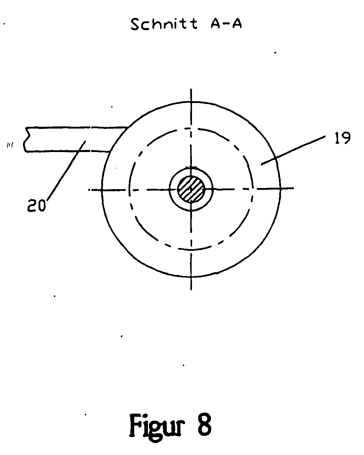

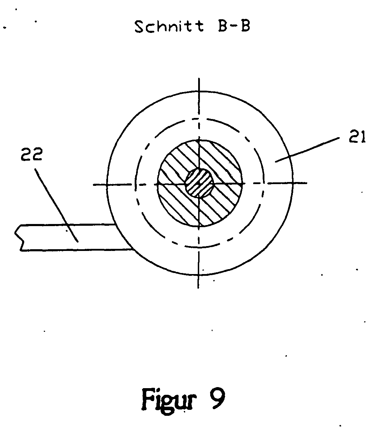

Gemäß Figur 8 gelangt ein mit Staub/Aerosolen beladener Teilstrom über einen Eintrittsstutzen 20 in den Eintrittszylinder 19. Über einen Austrittszylinder 21 mit tangential angeordneten Austrittsstutzen 22 - siehe hierzu Figur 9 - wird der Teilgasstrom abgeleitet.

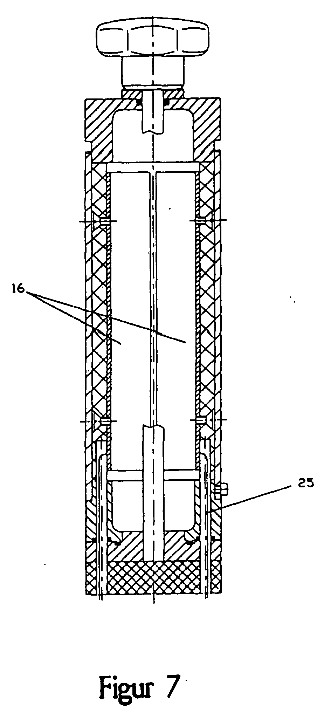

In der rohrförmigen triboelektrischen Meßkammer 5 sind elektrisch leitende halbschalenförmige Meßfühler 16 angeordnet. Aus Figur 7 ist der halbschalenförmige Aufbau der Meßfühler 16 ersichtlich. Der elektrische Kontakt wird durch den Abstand 26 der Meßfühler 16 verhindert. Weiterhin wird durch konstruktive Maßnahmen verhindert, daß die Enden der Meßfühler 16 mit den Ein- und Austrittszylindern 19, 21 elektrischen Kontakt haben. Die Meßfühler 16 sind an der äußeren Fläche mit einer Isolierschicht 18 umgeben. Die Isolierschicht verhindert Wärmeverluste und ist elektrisch nicht leitend.

Beide Bedingungen sind Voraussetzungen für die Funktion bzw. die richtige Arbeitsweise der Meßvorrichtung. Die äußere Wand der Meßkammer ist als Rohr ausgeführt.

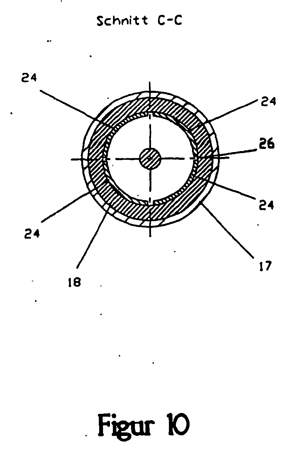

Im Gegensatz zu Figur 7 ist aus den Figuren 10, 11, 12 ersichtlich, daß die Meßfühler 16 nicht halbschalenartig ausgebildet sein müssen. Gemäß Figur 10 sind auf dem Umfang mehrere Meßfühler 16 angeordnet. Diese sind in der Draufsicht gesehen als Kreisringsegmente ausgebildet.

Die Stirnflächen der Kreisringsegmente, die die Meßfühler darstellen, sind mit Positionszeichen 24 versehen. Für das Meßverfahren, zum Beispiel für den Nullpunktabgleich, können die zusätzlichen Meßfühler sehr zweckmaßig sein.

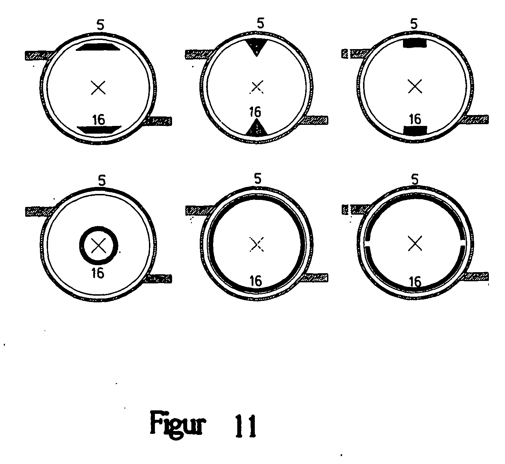

Weiterhin soll noch auf folgende Variationen der Meßfühler 16 verwiesen werden: Da für die Staubmessung der Ladungsaustausch zwischen Meßfühler und Staubteilchen genutzt wird, können alternativ die Meßfühler 16 auch unterschiedlich ausgeführt werden, beispielweise als Sensor, der am inneren Umfang der rohrförmigen triboelektrischen Meßkammer 5 oder zentral angeordnet ist in den Formen Hohlzylinder, Rundstab, Trapezprofil oder Rechteckstab. Es wird hierzu auf die Figur 11 verwiesen.

Die Meßfühler 16 können sowohl metallisch leitend als auch mit einer speziellen Beschichtung ausgeführt werden, sowie mit gleichen oder unterschiedlichem Potential verbunden sein.

Die triboelektrischen Meßsignale müssen abgeleitet und der Verarbeitung zugeführt werden. Die entsprechenden Elektrokabel befinden sich in den Schächten 25.

Der triboelektrische Effekt tritt ein, wenn der mit Staubteilchen beladene Gasstrom 23 zyklonartig unter reibender Drehbewegung an den Meßfühlern 16 durch die Meßkammer 15 tritt. Der tangentiale Eintritt des Gasstromes 23 und dessen zyklonartige Fortbewegung ist im Prinzip bei einem Rotationsabscheider realisiert. Beider Erfindung wird mit der zyklonartigen Bewegung jedoch ein weiterer Vorteil erreicht, nämlich das Erhöhen des triboelektrischen Effekts zur Staubmessung. Damit sind Messungen auch in kleineren Staubkonzentrationsbereichen möglich.
Die Anpassung der Signalhöhe ist auch über die Größe und konstruktive Ausführung der Meßfühler möglich.
Durch die Beschichtung der Meßfühler beispielsweise mit niederohmigen PTFE ist eine weitere positive Beeinflussung der Signalhöhe möglich.

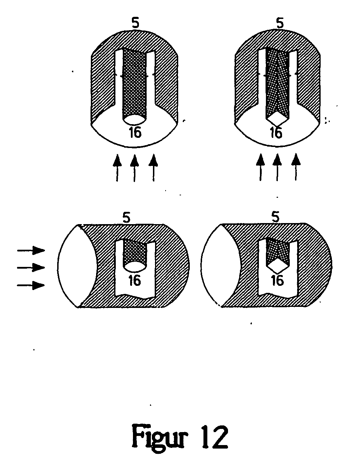

Abschließend sei noch auf weitere Ausgestaltungen der Meßfühler und deren Anordnungen in der Meßkammer verwiesen. Aus Figur 12 ist ersichtlich, daß neben der tangentialen Anströmung auch eine zentrale Anordnung der Meßfühler und mittige Anströmung nach vorheriger Geschwindigkeitserhöhung möglich ist. Figur 12 zeigt Beispiele für eine vertikale und horizontale Anordnung der triboelektrischen Meßkammer.

Eine redundante Meßfühleranordnung ermöglicht eine geräteinterne Kontrolle des Gleichlaufs der triboelektrischen Signale. Dies wirkt sich u. a. positiv auf die Meßqualität aus.

### Bezugszeichenliste

- 1: Hakensonde mit für isokinetische Probenahme ausgelegtem Sondendurchmesser
- 2: Entnahmesonde für Meßgas
- 3: Sondenheizung (geregelt)
- 4: Mehrwegkugelhahn zur Realisierung der Rückspülung
- 5: Triboelektrische Meßkammer
- 6: Temperaturmeßgerät
- 7: Injektor
- 8: Gasaustritt
- 9: Treibluftgebläse für Injektor
- 10: Spülluftgebläse
- 11: Ansaugfilter
- 12: Ansaugfilter
- 13: Flansch am Abgaskanal
- 14: Mischdüse
- 15: Kammer für intermittierende Temperaturführung
- 16: Meßfühler
- 17: äußere Wand der Meßkammer
- 18: Isolierschicht
- 19: Eintrittszylinder
- 20: Eintrittsstutzen
- 21: Austrittszylinder
- 22: Austrittsstutzen
- 23: Gasstrom mit Staubpartikeln
- 24: Meßfühler in der Draufsicht (als Segmente eines Kreisringes)
- 25: Schächte für Elektrokabel
- 26: Abstände der Meßfühler

## Patentansprüche

1. Verfahren zur extraktiven triboelektrischen Staub- und Aerosolmessung in strömenden Gasen, wobei von einem staub- und aerosolbeladenen Hauptgasstrom ein Teilgasstrom abgezweigt, über einen Eintrittszylinder (19) in eine mit Messfühlern (16) versehene röhrenförmige triboelektrische Messkammer (5) geführt und an den Messfühlern (16) fortbewegt wird, wobei die darin enthaltenen Staub- und Aerosolpartikel einen Ladungsaustausch an den Messfühlern (16) erzeugen und dann der Teilgasstrom über einen Austrittstutzen (22) die triboelektrische Messkammer (5) verlässt, **dadurch gekennzeichnet, dass** zur Ermittlung der Aerosolkonzentration vor Eintritt des Teilgasstromes in die triboelektrische Messkammer (5) sämtliche Aerosole durch Temperaturerhöhung vollständig verdampft werden, so dass nunmehr ausschließlich Staubpartikel detektiert werden, anschließend die Temperatur derart abgesenkt wird, dass die Aerosole nicht mehr verdampfen und die Aerosolkonzentration aus der Differenz der Messsignale für Staub und der Messsignale für Aerosol sowie für Staub ermittelt werden.

2. Verfahren nach Anspruch 1, **dadurch gekennzeichnet, dass** zur Ermittlung der Aerosolkonzentration ein intermittierendes Temperaturniveau realisiert wird.

3. Verfahren nach Anspruch 1, **dadurch gekennzeichnet, dass** der Teilgasstrom über einen Eintrittszylinder (19) tangential in die triboelektrlsche Messkammer (5) tritt und der Teilgasstrom zyklonartig unter reibender Drehbewegung an den Messfühlern (16) fortbewegt wird.

4. Einrichtung zur extraktiven Staub- und Aerosolmessung in strömenden Gasen umfassend eine rohrförmige triboelektrische Messkammer (6) mit darin plazierten Messfühlern (18), wobei sich zwischen den Messfühlern (16) und der äußeren Wand (17) der rohrförmigen Messkammer eine Isolierung befindet, und am oberen Ende der Messkammer (5) ein Eintrittsstutzen (20) an einem Eintrittszylinder (19) angeschlossen ist, am unteren Ende der Meßkammer (5) ein Austrittsstutzen (22) am einem Austrittsxylinder (21) angeschlossen ist und der Eintrittszylinder (19) und der Austrittsaylinder (21) gegenüber den Messfühlern (16) keinen elektrischen Kontakt aufweisen, und
**gekennzeichnet**
**durch** eine Kammer (15) für Intermittierende Temperaturführung und eine Entnahmesonde (2) für Messgas, wobei Im Bereich der Kammer *(15)* für intermittierende Temperaturführung eine geregelte Sondenheizung (3) angeordnet ist, sich in der Entnahmesonde (2) für Messgas eine Mischdüse (14) für Verdünnungsluft befindet, zwischen der Entnahmesonde (2) und der triboelektdschen Messkammer *(5)* ein Mehrwegkugelhahn (4) zwecks Rückspülung unter Verwendung eines Trelbluftgebläses (9) angeordnet ist und ein Injektor (7) nach der tnboetektrischen Messkammer *(5)* derart plaziert ist, dass der Gasstrom (23) durch die Messkammer *(5)* gesaugt wird.

5. Einrichtung nach Anspruch 4 **dadurch gekennzeichnet, dass** die Messfühler (16) in der rohrförmigen triboelektrischen Messkammer (5) halbschalenförmig ausgebildet sind oder dass in der rohrförmigen triboelektrischen Messkammer (15) mehr als zwei Messfühler (16) platziert sind, wobei diese Messfühler (16) in der Draufsicht betrachtet, Segmente (24) eines Kreisringes darstellen, jedoch unter Wahrung von Abständen, die einen elektrischen Kontakt verhindern oder dass die Messfühler (16) unterschiedliche geometrische Formen aufweisen bei vertikaler oder horizontaler Anströmung.

## Claims

1. Method for the extractive triboelectric measurement of dust and aerosols in streaming gases from which a partial stream is branched off from the dust-laden gas main stream and then enters through an intake cylinder (19) a tube-shaped triboelectrical measuring chamber (5) equipped with sensors (16), where the gas stream is moved across the sensors (16) and thereby causes a charge exchange being generated with said sensors (16), after which the gas stream exits through an outlet piece (22) from the triboelectrical measuring chamber (5), **characterized in that**, before the partial gas stream enters the triboelectrical measuring chamber (5), the full range of aerosols is evaporated by increasing the temperature in such a way that nothing else than dust particles are detected, after which the temperature is decreased to such a level at which no aerosols are evaporated any more, and the aerosol concentration can be determined from the difference between the signals read out for "dust alone" and for "aerosols plus dust".

2. Method according to claim 1, **characterized in that** an intermittent temperature regime is implemented for determining the aerosol concentration.

3. Method according to claim 1, **characterized in that** the partial gas stream enters the triboelectrical measuring chamber (5) in tangential direction through an intake cylinder (19), after which said partial gas stream is forced into a cyclone-like motion across the sensors (16) causing rubbing effects to the latter.

4. Device for the extractive triboelectric measurement of dust and aerosols in streaming gases, comprising sensors (16) placed inside a tubular triboelectrical measuring chamber (5), with an insulating layer between sensors (16) and the tubular measuring chamber's outer wall (17), an intake piece (20) connected to an intake cylinder (19) at the measuring chamber's (5) upper end and an outlet piece (22) connected to an outlet cylinder (21) at the measuring chamber's (5) lower end, with both the intake cylinder (19) and the outlet cylinder (21) having no electric contact to the sensors (16),**characterized in that** there is a specific chamber (15) with intermittent temperature regime and a probe (2) for sampling measuring gas, where a regulated probe heating device (3) is arranged around the chamber (15), a proportioning nozzle (14) for diluent air is situated inside the probe (2) for sampling measuring gas, a multi-way spherical valve (4) for implementing back-flush operation by using a power air blower (9) is arranged between the probe (2) for sampling measuring gas and the triboelectrical measuring chamber (5), and an injector (7) is placed downstream the triboelectrical measuring chamber (5) in such a way that the gas stream (23) is sucked through the measuring chamber (5).

## Revendications

1. Procédé pour la mesure extractive de poussière et d'aérosol dans des courants de gaz, un courant partiel de gaz étant dérivé du courant principal de gaz passe par un cylindre d'entrée (19) pour être mené dans une chambre de mesure triboélectrique (5) tubulaire dotée de capteurs de mesure (16) et se déplace sur les capteurs de mesure (16), les particules de poussière et d'aérosol qu'il contient produisant un échange de charge sur les capteurs de mesure et puis le courant partiel de gaz quitte la chambre de mesure triboélectrique (5) par une tubulure de sortie (22), **caractérisé par le fait que** pour déterminer la concentration d'aérosol avant l'entrée du courant partiel de gaz dans la chambre de mesure triboélectrique (5) la totalité des aérosols est évaporée par une augmentation de la température, si bien que seules les particules de poussière sont détectées, ensuite la température est diminuée de telle manière que les aérosols ne sont plus évaporés et la concentration d'aérosol peut être déterminée en faisant la différence entre les signaux de mesure pour la poussière et ceux pour l'aérosol et pour la poussière.

2. Procédé selon la revendication 1, **caractérisé par le fait que** pour déterminer la concentration d'aérosol un niveau de température intermittent est réalisé.

3. Procédé selon la revendication 1, **caractérisé par le fait que** le courant partiel de gaz entre tangentiellement par un cylindre d'entrée (19) dans la chambre de mesure triboélectrique (5) et que le courant partiel de gaz de manière semblable à un cyclone se déplace sur les capteurs de mesure (16) en effectuant un mouvement de rotation frottant.

4. Dispositif pour la mesure extractive de poussière et d'aérosol dans un courant de gaz comportant une chambre de mesure triboélectrique (5) tubulaire et des capteurs de mesure (16) placés dedans, entre les capteurs de mesure (16) et la paroi extérieure (17) de la chambre de mesure tubulaire se trouve une isolation et sur l'extrémité supérieure de la chambre de mesure (5) une tubulure d'entrée (20) est raccordée à un cylindre d'entrée (19), sur l'extrémité inférieure de la chambre de mesure (5) une tubulure de sortie (22) est raccordée à un cylindre de sortie (21) et le cylindre d'entrée (19) et le cylindre de sortie (21) n'ont pas de contact électrique avec les capteurs de mesure (16), et **caractérisé par** une chambre (15) pour prise de température intermittente et par une sonde de prélèvement (2) pour le gaz de mesure, dans la zone de la chambre (15) est disposé un chauffage de sonde (3) régulé pour la prise de température intermittente, dans la sonde de prélèvement (2) pour le gaz de mesure se trouve une buse de mélange (14) pour l'air d'appoint, entre la sonde de prélèvement (2) et la chambre de mesure triboélectrique (5) est disposé un robinet sélecteur à boisseau sphérique (4) pour le rinçage à contre-courant par utilisation d'une soufflante à air propulseur (9) et un injecteur (7) placé après la chambre de mesure triboélectrique (5) de telle manière que le courant de gaz (23) est aspiré au travers de la chambre de mesure (5).
